# EUROPÄISCHE PATENTSCHRIFT

(11) **EP 2 712 666 B1**
(45) Veröffentlichungstag und Bekanntmachung des Hinweises auf die Patenterteilung: **14.06.2017**
(21) Anmeldenummer: 13181234.9
(22) Anmeldetag: 21.08.2013
(51) Int. Cl.: B01D 39/08, B01D 39/16

(54) **Filterband, Herstellungsverfahren und Verwendung**
Filterbelt, method of production and use
Bande de filtration, procédé de fabrication et utilisation

(30) Priorität: 26.09.2012 DE 202012103694 U
(43) Veröffentlichungstag der Anmeldung: 02.04.2014
(73) Patentinhaber: Heimbach GmbH & Co. KG, 52353 Düren (DE)
(72) Erfinder: Bloch, Klaus, 53757 Sankt Augustin (DE)
(74) Vertreter: Albrecht, Ralf

(56) Entgegenhaltungen:
- EP-A1- 0 630 739
- EP-A1- 0 837 014
- WO-A1-89/00592

## Beschreibung

Die Erfindung betrifft ein Filterband mit beidseitigen Bandoberflächen und einem Gewebeträger, der Gewebefäden aus Kunststoff aufweist, die Kett- und Schussfäden bilden. Die Erfindung betrifft auch ein Verfahren zur Herstellung des Filterbandes und die Verwendung des Filterbandes in einem Druckbandfilter. Insbesondere zur Fest-Flüssig-Trennung werden Druckfilter, z.B. in Form von Pressfilterautomaten, eingesetzt, bei denen ein Filterband innerhalb eines vertikal durchströmten Filtergehäuses mäanderförmig bzw. leporelloartig aufgespannt ist, wobei in Durchströmrichtung eine Vielzahl von horizontal sich erstreckenden Bandabschnitten als Filtrationsflächen angeboten werden. Ein bekannter Typ eines solchen Druckfilters ist der von Outotec angebotene Larox®-Druckfilter, der schematisch in den Figuren 1 und 2 der WO 00/48707 A1 gezeigt ist. Dabei kann das Filterband endlos, d.h. umlaufend ausgebildet sein, aber auch endlich, wobei es von einer Spendewalze abgezogen, durch den Innenraum des Filtergehäuses geführt und dann auf eine Sammelrolle aufgewickelt wird.

Es sind Filterbänder bekannt, die einen Gewebeträger aufweisen und auf den Bandoberflächen mit einer Antihaftbeschichtung, beispielsweise aus PTFE versehen sind (DE 198 19 916 A1). Ein solches Filterband ist auch der schon oben erwähnten WO 00/48707 A1 zu entnehmen. Bei diesen Filterbändern besteht die Gefahr der Delamination der außenseitigen Beschichtungen infolge der Bandführung über Umlenkwalzen relativ geringen Durchmessers in dem Druckbandfilter. Entsprechend ist die Lebensdauer derart aufgebauter Filterbänder begrenzt.

In der WO 99/61130 A1 ist ein Filterband offenbart, bei dem ein Träger, der auch als Gewebe ausgebildet sein kann, mit einem mikroporösen Polymermaterial zumindest teilweise derart imprägniert ist, dass der Träger im Wesentlichen in dieses mikroporöse Material eingebettet ist. Das Polymermaterial dient als Haftvermittler für eine Fluorpolymerbeschichtung auf einer der Außenseiten des Trägers, um der Tendenz zur Delamination der Beschichtung entgegenzuwirken. Die Herstellung eines solchen Filterbandes ist jedoch aufwendig und mit hohem Materialeinsatz verbunden.

Fluor-Kunststoff-Beschichtungen unter Verwendung eines Haftvermittlers oder Dickungsmittels sind auch aus anderen technischen Gebieten, die nichts mit Filtertechnik zu tun haben, bekannt. Aus der EP 0 630 739 A1 und der EP 0 837 014 A1 ist ein Endlosband bekannt, das Teil einer Vorrichtung zur Herstellung von Wellpappe ist. Das Endlosband dient insbesondere der Bewegung von Wellpappe oder deren Komponenten während des Herstellungsprozesses und der Übertragung von Wärme auf bewegte, feuchte Wellpappe. Während des Betriebs steht das Endlosband ständig in Kontakt mit Zähnen eines Zahnrades. Daher ist das Endlosband sehr temperaturbeständig und widerstandsfähig. Es weist eine obere Canvas-Schicht auf, bei der es sich um ein Gewebe aus Kett-,und Schussfäden handelt. Eine freiliegende Oberfläche der oberen Canvas-Schicht ist mit einer Fluorpolymer-Beschichtung versehen, zu deren Herstellung zunächst pulverförmiger Fluor-Kunststoff mit einem Haftvermittler in Form eines Elastomers oder mit einem Dickungsmittel vermischt wird. Nach einer Auftragung der Mischung auf die Oberfläche der oberen Canvas-Schicht erfolgt eine Hitzebehandlung, die zu einer Aufschmelzung des anfänglich pulverförmigen Fluor-Kunststoffs und zu einer Ausbildung einer einheitlichen Deckschicht führt.

In der WO 89/00592 ist ein Verfahren zum Beschichten von Polymeroberflächen mit Polytetrafluoretylen (PTFE) beschrieben. Hierbei kann es sich beispielsweise um Oberflächen von Geweben oder bei der Filtration oder im Bereich der Medizin verwendeten Membranen - also sehr empfindliche Substrate - handeln. Zur Beschichtung der Polymeroberfläche wird das Substrat in einer Dispersion aus einem Benetzungsmittel und PTFE-Partikeln getränkt. Anschließend wird die Polymeroberfläche auf eine Temperatur erhitzt, die hoch genug ist, um zu bewirken, dass das Benetzungsmittel verdampft und die Moleküle der Oberfläche erweichen. Eine Einbettung der PTFE-Partikel in die Polymeroberfläche erfolgt dann bei der Erweichungstemperatur alleine über intermolekulare Kräfte, wie die Van-der-Waals-Kräfte, also ohne mechanische Druckbeaufschlagung.

Der Erfindung liegt die Aufgabe zugrunde, ein Filterband der eingangs genannten Art derart zu gestalten, dass es einfach und kostengünstig herzustellen ist und eine lange Lebensdauer hat.

Diese Aufgabe wird erfindungsgemäß dadurch gelöst, dass die Oberflächen der Gewebefäden mit Polymerpartikeln versehen sind, die wenigstens im Bereich der Bandoberflächen mittels Ausüben von Druck und Hitze auf die Bandoberflächen teilweise und/oder ganz in die Gewebefäden eingelassen, insbesondere eingedrückt sind, sodass das Vorsehen einer Haftvermittlerschicht entfällt. Grundgedanke der Erfindung ist es also, nicht eine auf der Außenseite des Gewebeträgers aufgebrachte, delaminationsgefährdete Beschichtung vorzusehen, sondern vorzugsweise diskrete Polymerpartikel auf den Oberflächen der Gewebefäden anzusiedeln, und zwar derart, dass sie teilweise, also über die Oberflächen der Gewebefäden vorstehend, aber auch vollständig in die Gewebefäden eingebettet sind. Hierdurch entsteht eine Kombination aus Haft- und Formschlussverbindung zwischen den Polymerpartikein und dem Kunststoffmaterial der Gewebefäden. Dabei sorgen die Polymerpartikel für eine gute Filterkuchenablösung und eine Porenverkleinerung des Gewebeträgers. Durch Auswahl des Kunststoffes für die Polymerpartikel kann die Oberflächeneigenschaft des Gewebeträgers entsprechend den jeweiligen Anforderungen angepasst werden. Von besonderem Vorzug ist, dass die Herstellung des

Filterbandes vergleichsweise wenig aufwendig ist, da der Materialaufwand für die Polymerpartikel deutlich geringer ist als bei Vorsehen einer geschlossenen Beschichtung und da das Vorsehen einer Haftvermittlerschicht, wie dies in der WO99/61130 A1 vorgeschlagen ist, entfällt.

Unter dem Begriff "einbetten" ist zu verstehen, dass die Polymerpartikel - soweit sie sich im Kunststoffmaterial der Gewebefäden befinden - dort vollflächig eingefasst werden, was beispielsweise dadurch erreicht werden kann, dass die Gewebefäden auf die Erweichungstemperatur deren Materials erhitzt und die Polymerpartikel in die Gewebefäden eingepresst werden, sodass die jeweilige Ausnehmung im Gewebefaden durch Materialverdrängung infolge des Einpressens des betreffenden Polymerpartikels entsteht. Sofern die Gewebefäden als Multifilamente oder Stapel- bzw. Spinnfasergarne ausgebildet sind, kann ein Einbetten der Polymerpartikel auch in der Weise stattfinden, dass diese zwischen die einzelnen Fasern gedrückt und dort formschlüssig und gegebenenfalls auch kraftschlüssig gehalten werden. Es müssen nicht sämtliche Polymerpartikel in die Gewebefäden eingebettet sein. Polymerpartikel können auch außerhalb des Materials der Gewebefäden vorhanden sein. Sie haften dann an anderen, mit den Gewebefäden verbundenen Polymerpartikeln oder auch an den Gewebefäden, ohne in diese eingebettet zu sein.

In Ausbildung der Erfindung ist vorgesehen, dass zumindest eine der Bandoberflächen, vorzugsweise beide Bandoberflächen, von den Gewebefäden gebildet ist. Dies bedeutet, dass abgesehen von den Polymerpartikeln keine weiteren Anhaftungen an den Bandoberflächen vorhanden sind, insbesondere keine Beschichtungen vorgesehen sind. Vorzugsweise besteht das Filterband allein aus dem Gewebeträger und den vorbeschriebenen Polymerpartikeln.

Das Vorhandensein von Polymerpartikeln muss nicht auf den Bereich der Bandoberflächen beschränkt sein. Es können auch Polymerpartikel im Inneren des Gewebeträgers in die Gewebefäden eingebettet und/oder zwischen benachbarten Gewebefäden eingeschlossen sein. Dort haben sie in erster Linie die Aufgabe, die von dem Gewebeträger freigelassenen Poren zu verkleinern und damit eine entsprechende Feinstfiltration zu ermöglichen.

Nach der Erfindung ist ferner vorgesehen, dass mindestens 50% der Polymerpartikel in die Oberflächen der Gewebefäden eingebettet sind. Der Prozentsatz kann deutlich höher sein, um die Haftung der Polymerpartikel an den Gewebefäden über die Lebensdauer des Filterbandes zu gewährleisten.

Die Polymerpartikel können aus einem Kunststoff bestehen, der einerseits eine möglichst gute Haftung mit den Gewebefäden gewährleistet, andererseits aber günstig für die hierdurch gewünschte Funktion ist. Geeignet sind vor allem Fluorpolymere, insbesondere PTFE, weil diese Materialien eine Antihaftwirkung haben und demgemäß für eine gute Filterkuchenablösung sorgen. Die Polymerpartikel sollten ein Volumen haben, das bei Umformung zu einer Kugel einen Kugeldurchmesser von maximal 200 µm, vorzugsweise maximal 150 µm, ergibt. Ferner sollten wenigstens 80% der Polymerpartikel ein Volumen haben, das bei Umformung zu einer Kugel einen Kugeldurchmesser von wenigstens 2 µm ergeben.

Die Gewebefäden sollten aus Polypropylen oder Polyester bestehen, da diese Materialien für Filterzwecke besonders geeignet sind. Es besteht auch die Möglichkeit, dass ein Teil der Gewebefäden aus Polypropylen und ein anderer Teil aus Polyester bestehen.

Das Filterband sollte ein Flächengewicht von 1200 bis 1800 g/m², vorzugsweise von 1300 bis 1600 g/m² haben. Als besonders vorteilhaft hat sich ein Wert von 1400 g/m² erwiesen. Ferner sollte das Filterband eine Luftdurchlässigkeit von maximal 15 l/dm² min, bevorzugt von 3 l/dm² min, bei einem Druck von 200 Pa haben, weil unterhalb dieses Grenzwertes auch kleine Feststoffteilchen abgefiltert werden.

Für die Ausbildung der Gewebebindung für den Gewebeträger kommen verschiedenen Arten von Gewebebindungen in Frage. Ziel sollte es sein, eine symmetrische Oberflächengestaltung zu erhalten, um einen optimalen Geradeauslauf des Filterbandes in dem Druckbandfilter zu erzielen. Hierfür besonders geeignet sind Körperbindungen, insbesondere symmetrische Spitzgrat- oder Fischgratköperbindungen. Die Kettfäden des Gewebeträgers sollten eine Fadendichte haben, die etwa zwei- oder dreifach so groß ist wie die Schussfadendichte. Beispielsweise kann der Gewebeträger eine Kettfadendichte aufweisen, die 20 bis 30 Fäden pro Zentimeter, vorzugsweise 22 bis 26 Fäden pro Zentimeter, noch besser 24 Fäden pro Zentimeter beträgt, während er eine Schussfadendichte aufweist, die 8 bis 16 Fäden pro Zentimeter, zweckmäßigerweise 8 bis 14 Fäden pro Zentimeter, vorzugsweise 9 Fäden pro Zentimeter beträgt.

Nach einem weiteren Merkmal der Erfindung ist vorgesehen, dass die Kettfäden aus Zwirnen gebildet sind, beispielsweise in Form von 3-fach-Zwirnen. Hierfür kommen Multifilamentgarne, beispielsweise mit der Spezifikation 1.100 dtex PP Multifilamentgarn in S-Drehung 200 T/m x 3 in Z-Drehung 150 T/m. Zusätzlich können die Kettfäden mit einem gegenüber den Multifilamentgarnen andersfarbigen, insbesondere blauen Monofilament verzwirnt sein. Die kontrastierende Farbgebung soll als Indikator für den Verschmutzungsgrad dienen. Wenn die Ablagerungen - wie in der Regel - hell sind, kann mit einer kräftigen, dunkleren Farbgebung der Verschmutzungsgrad besonders gut festgestellt werden.

Die Schussfäden können als Monofilamente ausgebildet sein. Sie haben zweckmäßigerweise einen Durchmesser von 0,3 bis 0,5 mm, vorzugsweise von 0,4 mm. Zusätzlich können die Schussfäden mit Stapelfasergarn, vorzugsweise einem Dref-Garn, umsponnen sein. Hierdurch entsteht eine mit einem Nadelfilz vergleichbare Struktur. Außerdem wird die Durchlässigkeit des Filterbandes reduziert. Zudem gewährleistet dies eine mindestens so gute Dimensionsstabilität wie mit dem Einsatz reiner Monofilamente zu erreichen ist.

Insbesondere für den Einsatz in Druckbandfiltern sollte das Filterband symmetrisch zu einer parallel zu den Bandoberflächen verlaufenden Mittelebene ausgebildet sein, da das Filterband in solchen Filtern abwechselnd die eine oder die andere Bandoberfläche als Filteroberfläche anbietet.

Die Herstellung des vorbeschriebenen Filterbandes geschieht derart, dass zunächst der Gewebeträger hergestellt wird und dass er dann mit einer Dispersion aus Wasser - oder einer ähnlichen Flüssigkeit - und Polymerpartikeln imprägniert wird. Anschließend wird er kalandriert, wobei in dem Kalander auf beide Bandoberflächen Druck und Hitze ausgeübt wird, die dafür sorgen, dass die an den Oberflächen der Gewebefäden zunächst anhaftenden Polymerpartikel zumindest teilweise und vor allen Dingen im Bereich der Bandoberflächen in die Oberflächen der Gewebefäden eingedrückt werden. Dabei sollte die Kalandrierung bei einer Temperatur stattfinden, bei der das Kunststoffmaterial der Gewebefäden erweicht. Bei Verwendung von Polypropylen ist eine Temperatur von ca. 145°C zweckmäßig. Die Imprägnierung selbst kann in einem Tauchbad, beispielsweise in einem Foulard, vorgenommen werden.

Die Dispersion zur Imprägnierung des Gewebeträgers sollte einen Wasseranteil haben, dessen Volumenanteil größer ist als der Volumenanteil der Polymerpartikel. Vorzugsweise sollte der Wasseranteil im Bereich von 80 Vol.% und der Polymerpartikelanteil im Bereich von 20 Vol.% liegen.

Zwischen Herstellung des Gewebeträgers und anschließender Kalandrierung sollte noch eine Thermofixierung vorgenommen werden. Auch sie kann zweckmäßigerweise bei einer Temperatur stattfinden, bei der das Kunststoffmaterial der Gewebefäden erweicht, also bei ca. 145°C, wenn Polypropylen verwendet wird. Nach Herstellung des Filterbandes kann es in einem Druckbandfilter als endliches oder endloses Filterband verwendet werden.

## Patentansprüche

1. Filterband mit beidseitigen Bandoberflächen und einem Gewebeträger, der Gewebefäden aus Kunststoff aufweist, die Kett- und Schussfäden bilden, **dadurch gekennzeichnet, dass** die Oberflächen der Gewebefäden mit Polymerpartikeln versehen sind, die wenigstens im Bereich der Bandoberflächen mittels Ausüben von Druck und Hitze auf die Bandoberflächen teilweise und/oder ganz in die Gewebefäden eingebettet sind, so dass das Vorsehen einer Haftvermittlerschicht entfällt.

2. Filterband nach Anspruch 1, **dadurch gekennzeichnet, dass** zumindest eine der Bandoberflächen von den Gewebefäden gebildet ist oder dass Polymerpartikel auch im Inneren des Gewebeträgers in die Gewebefäden eingebettet sind.

3. Filterband nach einem der vorherigen Ansprüche, **dadurch gekennzeichnet, dass** mindestens 50% der Polymerpartikel in die Oberflächen der Gewebefäden eingebettet sind und/oder dass die Polymerpartikel aus einem Fluorpolymer, insbesondere aus PTFE, bestehen, und/oder dass die Polymerpartikel ein Volumen haben, das bei Umformung zu einer Kugel einen Kugeldurchmesser von maximal 200 µm, vorzugsweise maximal 150 µm, ergibt, und/oder dass wenigstens 80% der Polymerpartikel ein Volumen haben, das bei Umformung zu einer Kugel einen Kugeldurchmesser von wenigstens 2 µm ergibt.

4. Filterband nach einem der Ansprüche 1 bis 3, **dadurch gekennzeichnet, dass** die Gewebefäden aus Polypropylen oder Polyester oder dass ein Teil der Gewebefäden aus Polypropylen und ein anderer Teil aus Polyester bestehen.

5. Filterband nach einem der Ansprüche 1 bis 4, **dadurch gekennzeichnet, dass** das Filterband ein Flächengewicht von 1200 bis 1800 g/m² hat, vorzugsweise von 1300 bis 1600 g/m², noch besser von 1400 g/m² und/oder dass das Filterband eine Luftdurchlässigkeit von maximal 15 l/dm² min, bevorzugt von 3 l/dm² min oder weniger, bei einem Druck von 200 Pa hat.

6. Filterband nach einem der Ansprüche 1 bis 5, **dadurch gekennzeichnet, dass** der Gewebeträger eine Gewebebindung aufweist, die als Körperbindung, insbesondere symmetrische Spitzgrat- oder Fischgratköperbindung ausgebildet ist.

7. Filterband nach einem der Ansprüche 1 bis 6, **dadurch gekennzeichnet, dass** die Kettfäden des Gewebeträgers eine Kettfadendichte haben, die zwei- bis dreifach so groß ist wie die Schussfadendichte.

8. Filterband nach einem der Ansprüche 1 bis 7, **dadurch gekennzeichnet, dass** der Gewebeträger eine Kettfadendichte aufweist, die 20 bis 30 Fäden/cm, vorzugsweise 22 bis 26 Fäden/cm, noch besser 24 Fäden/cm beträgt, oder dass der Gewebeträger eine Schussfadendichte aufweist, die 8 bis 16 Fäden/cm, zweckmäßigerweise 8 bis 14 Fäden/cm, vorzugsweise 9 Fäden/cm beträgt.

9. Filterband nach einem der Ansprüche 1 bis 8, **dadurch gekennzeichnet, dass** die Kettfäden aus Zwirnen gebildet sind, die zweckmäßigerweise als 3-fach-Zwirne ausgebildet sind, vorzugsweise unter Verwendung von Multifilamentgarnen, und/oder dass die Kettfäden mit wenigstens einem andersfarbigen, insbesondere blauen Monofilament verzwirnt sind.

10. Filterband nach einem der Ansprüche 1 bis 9, **dadurch gekennzeichnet, dass** die Schussfäden als Monofilamente ausgebildet sind, zweckmäßigerweise mit einem Durchmesser von 0,3 bis 0,5 mm, vorzugsweise von 0,4 mm und/oder dass die Schussfäden mit Garn umsponnen sind, insbesondere mit Stapelfasergarn, vorzugsweise einem Dref-Garn.

11. Filterband nach einem der Ansprüche 1 bis 10, **dadurch gekennzeichnet, dass** das Filterband symmetrisch zu einer parallel zu den Bandoberflächen verlaufenden Mittelebene ausgebildet ist.

12. Verfahren zur Herstellung eines Filterbandes nach einem der Ansprüche 1 bis 11, wobei der Gewebeträger nach seiner Herstellung mit einer Dispersion aus Wasser und Polymerpartikeln imprägniert wird, **dadurch gekennzeichnet, dass** der Gewebeträger anschließend kalandriert wird, wobei insbesondere der Gewebeträger bei ca. 145°C kalandriert wird und wobei beim Kalandrieren Druck und Hitze auf beide Bandoberflächen ausgeübt wird.

13. Verfahren nach Anspruch 12, **dadurch gekennzeichnet, dass** die Imprägnierung in einem Tauchbad, bevorzugt unter Verwendung eines Foulards, vorgenommen wird, und/oder dass zur Imprägnierung einer Dispersion verwendet wird, bei der der Wasseranteil nach Volumen größer ist als der Anteil der Polymerpartikel, vorzugsweise bei der der Wasseranteil im Bereich von 80 Vol.% und der Polymerpartikelanteil im Bereich von 20 Vol.% liegt.

14. Verfahren nach Anspruch 12 oder 13, **dadurch gekennzeichnet, dass** der Gewebeträger vor der Kalandrierung thermofixiert wird, vorzugsweise bei einer Temperatur von ca. 145°C.

15. Verwendung des Filterbandes nach einem der Ansprüche 1 bis 11 in einem Druckbandfilter als endliches oder endloses Filterband, insbesondere in einem Vertikal-Druckbandfilter.

## Claims

1. A filter belt with belt surfaces on both sides and a fabric support that has fabric threads made of plastic which form warp and weft threads, **characterised in that** the surfaces of the fabric threads are provided with polymer particles which are partially and/or totally embedded into the fabric threads, at least in the region of the belt surfaces, by applying pressure and heat to the belt surfaces so that it is no longer necessary to provide a layer of adhesive agent.

2. The filter belt according to Claim 1, **characterised in that** at least one of the belt surfaces is formed by the fabric threads or that polymer particles are also embedded into the fabric threads within the fabric support.

3. The filter belt according to any of the preceding claims, **characterised in that** at least 50% of the polymer particles are embedded into the surfaces of the fabric threads and/or that the polymer particles are made of a fluoropolymer, in particular of PTFE, and/or that the polymer particles have a volume that, when reshaped to form a sphere, produces a sphere diameter of max. 200 µm, preferably max. 150 µm, and/or that at least 80% of the polymer particles have a volume that, when reshaped to form a sphere, produces a sphere diameter of at least 2 µm.

4. The filter belt according to any of Claims 1 to 3, **characterised in that** the fabric threads are made of polypropylene or polyester, or that one part of the fabric threads are made of polypropylene and another part is made of polyester.

5. The filter belt according to any of Claims 1 to 4, **characterised in that** the filter belt has a mass per unit area of 1200 to 1800 g/m², preferably of 1300 to 1600 g/m², even better of 1400 g/m², and/or that the filter belt has air permeability of max. 15 l/dm² min, preferably of 3 l/dm² min or less, at a pressure of 200 Pa.

6. The filter belt according to any of Claims 1 to 5, **characterised in that** the fabric support has a fabric weave which is in the form of a twill weave, in particular a symmetrical pointed or herringbone twill weave.

7. The filter belt according to any of Claims 1 to 6, **characterised in that** the warp threads of the fabric support have a warp thread density that is two or three times as great as that of the weft thread density.

8. The filter belt according to any of Claims 1 to 7, **characterised in that** the fabric support has a warp thread density of 20 to 30 threads/cm, preferably 22 to 26 threads/cm, even better 24 threads/cm, or that the fabric support has a weft thread density of 8 to 16 threads/cm, advantageously 8 to 14 threads/cm, preferably 9 threads/cm.

9. The filter belt according to any of Claims 1 to 8, **characterised in that** the warp threads are formed from twines which are advantageously made in the form of triple twines, preferably using multifilament yarns, and/or that the warp threads are twined with at least one monofilament that is of a different colour, in particular blue.

10. The filter belt according to any of Claims 1 to 9, **characterised in that** the weft threads are made as monofilaments, advantageously with a diameter of 0.3 to 0.5 mm, preferably of 0.4 mm, and/or that the weft threads are braided with yarn, in particular with staple fibre yarn, preferably a Dref yarn.

11. The filter belt according to any of Claims 1 to 10, **characterised in that** the filter belt is formed symmetrically to a centre plane running parallel to the belt surfaces.

12. A method for producing a filter belt according to any of Claims 1 to 11, after its manufacture the fabric support being impregnated with a dispersion of water and polymer particles, **characterised in that** the fabric support is then calendered, in particular the fabric support being calendered at approx. 145°C, and during calendaring pressure and heat being applied to both belt surfaces.

13. The method according to Claim 12, **characterised in that** the impregnation takes place in an immersion bath, preferably using a foulard, and/or that for the impregnation a dispersion is used with which the water portion is greater by volume than the portion of polymer particles, preferably with which the water portion is in the region of 80 vol. % and the polymer particle portion is in the region of 20 vol. %.

14. The method according to Claim 12 or 13, **characterised in that** the fabric support is thermoset before calendaring, preferably at a temperature of approx. 145°C.

15. The use of the filter belt according to any of Claims 1 to 11 in a pressure belt filter as a finite or continuous filter belt, in particular in a vertical pressure belt filter.

## Revendications

1. Bande filtrante comportant des surfaces de bande à deux côtés et un support de tissu, qui comporte des fils de tissu en matière plastique, qui forment des fils de chaîne et des fils de trame, **caractérisée en ce que** les surfaces des fils de tissu sont pourvues de particules de polymère, qui sont incorporées en partie et/ou entièrement dans les fils de tissu, au moins dans la région des surfaces de bande, en exerçant une pression sur et en chauffant les surfaces de bandes, de sorte à éviter de prévoir une couche d'adhérence intermédiaire.

2. Bande filtrante selon la revendication 1, **caractérisée en ce qu'**au moins une des surfaces de bande est formée par les fils de tissu ou **en ce que** les particules de polymère sont incorporées également à l'intérieur du support de tissu dans les fils de tissu.

3. Bande filtrante selon l'une des revendications précédentes, **caractérisée en ce qu'**au moins 50 % des particules de polymère sont incorporées dans les surfaces des fils de tissu et/ou **en ce que** les particules de polymère sont constituées d'un fluoropolymère, notamment de PTFE et/ou **en ce que** les particules de polymère ont un volume, qui, en les convertissant en une sphère, a un diamètre sphérique maximal de 200 µm, de préférence de 150 µm au maximum, et/ou **en ce qu'**au moins 80 % des particules de polymère ont un volume qui, en les convertissant en une sphère, a un diamètre sphérique d'au moins 2 µm.

4. Bande filtrante selon l'une quelconque des revendications 1 à 3, **caractérisée en ce que** les fils de tissu sont constitués de polypropylène ou de polyester ou **en ce qu'**une partie des fils de tissu est constituée de polypropylène et l'autre partie est constituée de polyester.

5. Bande filtrante selon l'une quelconque des revendications 1 à 4, **caractérisée en ce que** la bande filtrante a un grammage de 1200 à 1800 g/m², de préférence de 1300 à 1600 g/m² et de manière encore plus préférée de 1400 g/m² et/ou **en ce que** la bande filtrante présente une perméabilité à l'air au maximum de 15 l/dm² min., de préférence de 3 l/dm² min. ou moins, à une pression de 200 Pa.

6. Bande filtrante selon l'une quelconque des revendications 1 à 5, **caractérisée en ce que** le support de tissu comporte une armure, qui est conçue sous forme d'une armure sergée, notamment d'une armure sergée à chevrons ou à bâtons rompus symétrique.

7. Bande filtrante selon l'une quelconque des revendications 1 à 6, **caractérisée en ce que** les fils de chaîne du support de tissu ont une densité de fils de chaîne qui est deux à trois fois plus grande que la densité des fils de trame.

8. Bande filtrante selon l'une quelconque des revendications 1 à 7, **caractérisée en ce que** le support de tissu a une densité de chaîne qui est de 20 à 30 fils/cm, de préférence de 22 à 26 fils/cm et de manière encore plus préférée de 24 fils/cm ou **en ce que** le support de tissu a une densité de trame qui est de 8 à 16 fils/cm, avantageusement de 8 à 14 fils/cm et de préférence de 9 fils/cm.

9. Bande filtrante selon l'une quelconque des revendications 1 à 8, **caractérisée en ce que** les fils de chaîne sont constitués de fils retors, qui sont conçus avantageusement de fils retors à trois brins, de préférence en utilisant des fils à multifilaments, et/ou **en ce que** les fils de chaîne sont torsadés avec au moins un monofilament d'une couleur différente, notamment bleu.

10. Bande filtrante selon l'une quelconque des revendications 1 à 9, **caractérisée en ce que** les fils de trame sont conçus sous forme de monofilaments, ayant avantageusement un diamètre de 0,3 à 0,5 mm, de préférence de 0,4 mm et/ou **en ce que** les fils de trame sont guipés avec du fil, notamment avec du fil de fibres discontinues, de préférence avec du fil DREF.

11. Bande filtrante selon l'une quelconque des revendications 1 à 10, **caractérisée en ce que** la bande filtrante est réalisée symétriquement à un plan médian qui s'étend parallèlement aux surfaces de bande.

12. Bande filtrante selon l'une quelconque des revendications 1 à 11, ou le support de tissu est imprégné, après sa fabrication, avec une dispersion d'eau et de particules de polymère, **caractérisée en ce que** le support de tissu est ensuite calandré, le support de tissu étant calandré notamment à env. 145°C et, une pression étant exercée et une chaleur appliquée sur les deux surfaces de bande lors du calandrage.

13. Bande filtrante selon la revendication 12, **caractérisée en ce que** l'imprégnation est réalisée dans un bain d'immersion, de préférence en utilisant un foulard, et/ou **en ce que** pour l'imprégnation, on utilise une dispersion dans laquelle la proportion d'eau en volume est plus grande que la proportion de particules de polymère, de préférence dans laquelle la proportion d'eau est d'environ 80 % en volume et la proportion de particules de polymère est d'environ 20 % en volume.

14. Bande filtrante selon l'une des revendications 12 ou 13, **caractérisée en ce que** le support de tissu est fixé thermiquement avant le calandrage, de préférence à une température d'environ 145 °C.

15. Utilisation de la bande filtrante selon l'une quelconque des revendications 1 à 11 dans un filtre à bande sous pression sous forme d'une bande filtrante finie ou sans fin, notamment dans un filtre à bande sous pression vertical.
